# EUROPÄISCHE PATENTSCHRIFT

(11) **EP 2 133 588 B1**
(45) Veröffentlichungstag und Bekanntmachung des Hinweises auf die Patenterteilung: **29.12.2010**
(21) Anmeldenummer: 08010532.3
(22) Anmeldetag: 10.06.2008
(51) Int. Cl.: F16D 69/02, F16D 69/04

(54) **Reibring und Verfahren zur Herstellung eines Reibrings**
Friction ring and method for manufacturing a friction ring
Anneau de friction et procédé de fabrication d'un anneau de friction

(43) Veröffentlichungstag der Anmeldung: 16.12.2009
(73) Patentinhaber: Hoerbiger Antriebstechnik GmbH, 86956 Schongau (DE)
(72) Erfinder: Echtler, Peter, 86956 Schongau (DE); Fürguth, Werner, 87640 Biessenhofen/Altdorf (DE)
(74) Vertreter: Kitzhofer, Thomas

(56) Entgegenhaltungen:
- EP-A- 1 503 099
- DE-A1-102006 017 602
- GB-A- 2 219 638
- US-A- 4 615 427

## Beschreibung

Die Erfindung betrifft ein Verfahren zur Herstellung eines Reibrings sowie einen Reibring.

Bei Reibringen werden Karbonreibbeläge in der Regel in einen metallischen Körper mit kegelstumpfförmiger Ringfläche eingeklebt. Das Einziehen von einer mit Karbonbelag beklebten metallischen Trägerfolie ist ebenso möglich. Die Verbindung zwischen dem Reibbelagträger und dem Basiskörper wird in der Regel durch Verschweißen (siehe EP 792 715 B1) oder Formschluss bzw. durch Stoffschluss hergestellt. Streusinterbeläge werden meist auf einen planaren Körper gestreut und gebacken. Anschließend wird durch Umformen ein kegelstumpfförmiger Ring erzeugt. Das Einziehen einer besinterten Metallfolie sowie das Einbringen einer Belagabwicklung durch Stoff- oder Formschluss ist ebenfalls möglich.

Karbonreibbeläge zeichnen sich in der Regel durch eine gute Reibwertcharakteristik aus, haben aber im Vergleich zu Streusinterbelägen keine Offenporigkeit, die als Ölspeicher dienen kann. Bei niederen Temperaturen neigen Karbonbeläge daher eher als Sinterbeläge zu einer Reduzierung des Reibwertes und damit zum Systemausfall. Zudem wird die durch Reibung entstehende Wärme hauptsächlich längs zur Faserrichtung weitergeleitet. Ein Waermeübergang in den metallischen Basiskörper ist so nur bedingt möglich.

Streusinterbeläge hingegen zeichnen sich durch eine hohe Missbrauchssicherheit aus. Sie können aufgrund ihrer Offenporigkeit Öl gut speichern, haben in der Regel im Vergleich zu Karbonbelägen aber etwas niedrigere Reibwerte. Sie sind darüber hinaus kostengünstig herstellbar und können Wärme gut abführen und sind auch bei sehr niedrigen Temperaturen funktionssicher.

Aus der EP 1 503 099 A2 ist ein Konusring für eine Synchronisiereinrichtung in einem Schaltgetriebe gezeigt. Der Konusring weist auf seiner Innenseite einen Streusinterbelag und auf seiner Außenseite einen organischen Reibbelag auf, der vorzugsweise aufgeklebt ist.

Aus der GB 2 219 638 A ist eine Reibscheibe für ein Automatikgetriebe bekannt, das auf ihren beiden Ringflächen jeweils nebeneinander, aber im Abstand voneinander angeordnete Reibblöcke aufweist. Jeder Reibblock enthält einen Bereich aus einem ersten Material mit geringem Ölaufnahmevermögen und einem zweiten Material mit größerem Ölaufnahmevermögen.

Es ist Aufgabe der vorliegenden Erfindung, ein Verfahren zur Herstellung eines Reibrings zu schaffen, mit dem es möglich ist, einen Reibring zu schaffen, der die Vorteile der zuvor genannten Reibmaterialien zu kombinieren ermöglicht.

Hinsichtlich des erfindungsgemäßen Verfahrens erfolgt die Lösung dieser Aufgabe durch die Merkmale des Anspruches 1. Hinsichtlich des Reibrings erfolgt die Lösung dieser Aufgabe durch die Merkmale des Anspruchs 9.

Erfindungsgemäß wird somit ein ringförmiger planarer Basisträger teilweise oder vollflächig mit einem ersten Reibbelagmaterial, insbesondere Streusinter, bestreut und gebacken. Durch das Freihalten von Zonen auf dem Basisträger ist es ferner möglich, ein zweites Reibbelagmaterial auf den Basiskörper aufzubringen, das sich hinsichtlich Beschaffenheit und Charakteristiken vom ersten Reibbelagmaterial unterscheidet. In die freigehaltenen Zonen kann das zweite Reibbelagmaterial eingebracht und mit dem Basiskörper auf geeignete Art und Weise fixiert werden.

Hierdurch ist es möglich, auf wirtschaftliche Art und Weise einen Hybrid-Reibbelag für einen Reibring herzustellen, der in der Lage ist, bei hervorragender Reibwertcharakteristik Öl gut zu speichern und Wärme gut abzuleiten, also die Vorteile von Karbon- und Sinterreibbelägen zu vereinen.

Weitere Vorteile gemäß der Erfindung sind die größere Ölunabhaengigkeit, das verbesserte Kaltschaltverhalten sowie die erhöhte Leistungsdichte aufgrund der verbesserten Wärmeleitfähigkeit.

Ein weiterer Vorteil ist die Einstellbarkeit des Reibwerts über flächenmäßige Verteilung der jeweiligen Reibkomponenten.

Die Unteransprüche haben vorteilhafte Weiterbildungen der Erfindung zum Inhalt.

Um Zonen für das zweite Reibmaterial freizuhalten, ist es möglich, den Basisträger während des Aufbringens des ersten Reibmaterials, also gleichzeitig zu diesem Aufbringen zu maskieren, so dass nur die nicht maskierten Bereiche des Basiskörpers mit dem ersten Reibbelagmaterial beschichtet und mit diesem verbunden werden.

Sodann wird in die freigehaltenen Zonen das zweite Reibmaterial eingebracht und fixiert.

Zum Freihalten ist es alternativ ferner möglich, den mit dem ersten Reibbelagmaterial versehenen Basiskörper durch Prägen oder durch eine spanende Bearbeitung mit Zonen in Form von Fenstern oder Taschen zu versehen, in die dann das zweite Reibbelagmaterial eingebracht werden kann.

Als erstes Reibbelagmaterial ist insbesondere ein metallisches Reibmaterial, insbesondere Streusintermaterial, vorgesehen.

Als zweites Reibbelagmaterial sind insbesondere Karbonbeläge der faserhaltige Reibbelagmaterialien denkbar.

Auch Kombinationen von Reibbelagmaterialien aus unterschiedlichen Materialkomponenten sind grundsätzlich möglich.

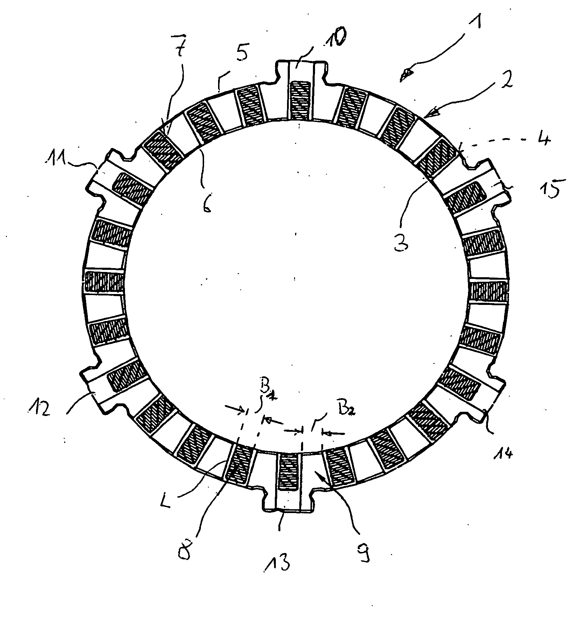

Weitere Einzelheiten, Vorteile und Merkmale der vorliegenden Erfindung ergeben sich aus nachfolgender Beschreibung eines Ausführungsbeispiels eines erfindungsgemäßen Reibrings anhand der einzigen Figur der Zeichnung.

Diese Figur zeigt eine Draufsicht auf einen erfindungsgemäßen Reibring 1 im planaren Zustand.

Der Reibring 1 weist einen kreisringförmigen Basiskörper 2 auf, der zwei kreisringförmige Belagflächen 3 und 4 aufweist, von denen aufgrund der gewählten Darstellung nur die Belagfläche 3 sichtbar ist, so dass die zweite gegenüberliegende Belagfläche 4 mit einem gestrichelten Pfeil angedeutet ist. Die Belagflächen 3 und 4 werden jeweils von einem ersten Umfangsrand 5 großen Durchmessers und einem zweiten Umfangsrand 6 kleinen Durchmessers begrenzt, wie sich dies im Einzelnen aus der zeichnerischen Darstellung der Figur ergibt.

Der Basiskörper 2 kann ferner mit umfangsseitigen Nocken oder Lappen 10-15 versehen sein, wie sich dies ebenfalls aus der Figur ergibt.

Gemäß der Erfindung ist zumindest eine der Belagflächen, im dargestellten Beispielsfall die Belagfläche 3, mit einem Reibbelag versehen, der in seiner Gesamtheit mit der Bezugsziffer 7 gekennzeichnet ist.

Erfindungsgemäß weist der Reibbelag 7 zumindest einen ersten Belagabschnitt 8 und einen zweiten Belagabschnitt 9 auf, die jeweils aus unterschiedlichen Reibbelagmaterialien bestehen.

Wie sich aus der zeichnerischen Darstellung der Figur ergibt, sind bei der dargestellten Ausführungsform die Belagabschnitte 8 und 9 jeweils abwechselnd benachbart zueinander auf der Belagfläche 3 angeordnet. Hierbei erstreckt sich jeder der Belagabschnitte 8 bzw. 9 vom Umfangsrand 5 großen Durchmessers zum Umfangsrand 6 kleinen Durchmessers, wie sich dies ebenfalls aus der Figur im Einzelnen ergibt.

Der Belagabschnitt 9 weist eine Breite B₁ auf, während der Belagschnitt 8 eine Breite B₂ aufweist. Diese-Breiten sind je nach Anwendungsfall wählbar.

Die Länge L der Belagabschnitte 8 und 9 entspricht dem Abstand zwischen dem Umfangsrand 5 und dem Umfangsrand 6, wie sich dies ebenfalls aus der Figur ergibt.

Andere Anordnungen der Belagabschnitte 8 und 9, also beispielsweise Anordnungen mehrerer Belagabschnitte eines Reibbelagmaterials, an die sich wiederum eine Anordnung mehrerer Belagabschnitte des zweiten Reibmaterials anschließen, sind ebenfalls denkbar und von Anwendungsfall zu Anwendungsfall wählbar.

Neben der schriftlichen Offenbarung der Erfindung wird hiermit zu deren Ergänzung explizit auf die zeichnerische Darstellung verwiesen.

### Bezugszeichenliste

- 1: Reibring/Synchronring
- 2: Basiskörper
- 3, 4: Belagflächen
- 5: Umfangsrand großen Durchmessers
- 6: Umfangsrand kleinen Durchmessers
- 7: Reibbelag
- 8: erster Belagabschnitt
- 9: zweiter Belagabschnitt
- 10-15: Nocken
- B₁: Breite des ersten Belagabschnitts 8
- B₂: Breite des zweiten Belagabschnitts 9
- L: Länge der Belagabschnitte 8, 9

## Patentansprüche

1. Verfahren zur Herstellung eines Reibrings (1) mit folgenden Verfahrensschritten:
- Bereitstellen eines planaren Basisträgers (2) mit zumindest einer Belagfläche (3, 4);
- Aufbringen eines ersten Reibbelagmaterials auf die zumindest eine Belagfläche (3) des Basisträgers (2);
- Freihalten von Zonen auf dieser Belagfläche (3) des Basisträgers (2) für ein zweites, sich vom ersten Reibbelagmaterial unterscheidendes Reibbelagmaterial;
- Anbringen des zweiten Reibbelagmaterials auf den freigehaltenen Zonen dieser Belagfläche (3), so dass die aus dem ersten und dem zweiten Reibbelagmaterial gebildeten Belagabschnitte (8, 9) abwechseind benachbart zueinander auf der Belagfläche (3) angeordnet sind; und
- Umformen des beschichteten planaren Basisträgers (2) in einen konusförmigen Körper.

2. Verfahren nach Anspruch 1, **dadurch gekennzeichnet, dass** das Freihalten der Zonen gleichzeitig mit dem Aufbringen des ersten Reibbelagmaterials durch Maskieren des Basisträgers (2) während des Aufbringens des ersten Reibbelagmaterials erfolgt.

3. Verfahren nach Anspruch 1, **dadurch gekennzeichnet, dass** das Freihalten der Zonen durch Prägen oder durch eine spanende Bearbeitung des aufgebrachten ersten Reibbelagmaterials zur Erzeugung von Belagtaschen erfolgt.

4. Verfahren nach einem der Ansprüche 1 bis 3, **dadurch gekennzeichnet, dass** das erste Reibbelagmaterial ein metallisches Reibbelagmaterial, insbesondere Streusintermaterial, ist.

5. Verfahren nach Anspruch 4, **dadurch gekennzeichnet, dass** das metallische Reibbelagmaterial zum Aufbringen auf den Basisträger (2) auf diesen aufgestreut und gebacken wird.

6. Verfahren nach einem der Ansprüche 1 bis 5, **dadurch gekennzeichnet, dass** das zweite Reibbelagmaterial ein Karbonbelag oder ein faserhaltiges Reibbelagmaterial ist.

7. Verfahren nach einem der Ansprüche 1 bis 6, **dadurch gekennzeichnet, dass** das zweite Reibbelagmaterial aus unterschiedlichen Materialienkomponenten besteht.

8. Verfahren nach einem der Ansprüche 1 bis 7, **dadurch gekennzeichnet, dass** das zweite Reibbelagmaterial stoffschlüssig mit den freigehaltenen Zonen verbunden wird.

9. Reibring (1) hergestellt gemäß dem Verfahren einem der vorgehenden Ansprüche
- mit einem konusförmigen Basisträger (2), der zwei kreisringförmige Belagflächen (3, 4) aufweist, die von einem ersten Umfangsrand (5) großen Durchmessers und einem zweiten Umfangsrand (6) kleinen Durchmessers begrenzt sind, und
- mit einem Reibbelag (7) auf zumindest einer der Reibbelagflächen (3, 4), wobei - der Reibbelag (7) zumindest einen ersten Belagabschnitt (8) aus einem ersten Reibbelagmaterial, und einen zweiten Belagabschnitt (9) aus einem zweiten, sich vom ersten Reibbelagmaterial unterscheidenden Reibbelagmaterial aufweist, und
- wobei sich die ersten und zweiten Belagabschnitte (8, 9) vom Umfangsrand (5) großen Durchmessers zum Umfangsrand (6) kleinen Durchmessers erstrecken und die Belagabschnitte (8, 9) abwechselnd benachbart zueinander
auf der Belagfläche (3) angeordnet sind.

10. Reibring nach Anspruch 9, **dadurch gekennzeichnet, dass** das erste Reibbelagmaterial ein metallisches Reibbelagmaterial, insbesondere ein Streusintermaterial, und das zweite Reibbelagmaterial ein organisches Reibbelagmaterial oder ein faserhaltiges Reibbelagmaterial ist.

## Claims

1. A method of manufacturing a friction ring (1), comprising the method steps of:
- providing a planar base carrier (2) having at least one lining surface (3, 4);
- applying a first friction lining material onto the at least one lining surface (3) of the base carrier (2);
- reserving zones on this lining surface (3) of the base carrier (2) for a second friction lining material that is different from the first friction lining material;
- affixing the second friction lining material on the reserved zones of this lining surface (3), so that the lining sections (8, 9) formed from the first and second friction lining materials are arranged alternately adjacent to each other on the lining surface (3); and
- reshaping the coated planar base carrier (2) to form a conical body.

2. The method according to claim 1, **characterized in that** the reservation of the zones is performed simultaneously with the application of the first friction lining material by masking the base carrier (2) during application of the first friction lining material.

3. The method according to claim 1, **characterized in that** the reservation of the zones is performed by stamping or by a cutting machining of the first friction lining material applied, for producing lining pockets.

4. The method according to any of claims 1 to 3, **characterized in that** the first friction lining material is a metallic friction lining material, in particular scatter sinter material.

5. The method according to claim 4, **characterized in that** for applying the metallic friction lining material, it is scattered onto the base carrier (2) and baked.

6. The method according to any of claims 1 to 5, **characterized in that** the second friction lining material is a carbon lining or a fiber-containing friction lining material.

7. The method according to any of claims 1 to 6, **characterized in that** the second friction lining material is made up of different material components.

8. The method according to any of claims 1 to 7, **characterized in that** the second friction lining material is connected with the reserved zones by an intermaterial bond.

9. A friction ring (1), manufactured in accordance with the method according to any of the preceding claims, comprising
- a conical base carrier (2) including two circular ring-shaped lining surfaces (3, 4) that are defined by a first peripheral rim (5) of large diameter and a second peripheral rim (6) of small diameter, and
- a friction lining (7) on at least one of the friction lining surfaces (3, 4),
- the friction lining (7) including at least a first lining section (8) made from a first friction lining material and a second lining section (9) made from a second friction lining material that is different from the first friction lining material, and
- the first and second lining sections (8, 9) extending from the peripheral rim (5) of large diameter to the peripheral rim (6) of small diameter, and the lining sections (8, 9) being arranged alternately adjacent to each other on the lining surface (3).

10. The friction ring according to claim 9, **characterized in that** the first friction lining material is a metallic friction lining material, in particular a scatter sinter material, and the second friction lining material is an organic friction lining material or a fiber-containing friction lining material.

## Revendications

1. Procédé de fabrication d'une bague de friction (1), comportant les étapes de procédé suivantes :
- fourniture d'un support de base (2) plan avec au moins une surface de garniture (3, 4) ;
- application d'un premier matériau de garniture de friction sur ladite au moins surface de garniture (3) du support de base (2);
- maintien de zones libres sur cette surface de garniture (3) du support de base (2) pour un deuxième matériau de garniture de friction qui est différent du premier matériau de garniture de friction ;
- application du deuxième matériau de garniture de friction sur les zones maintenues libres de cette surface de garniture (3), de telle sorte que les tronçons de garniture (8, 9) formés à partir du premier et du deuxième matériau de garniture de friction sont agencés alternativement au voisinage l'un de l'autre sur la surface de garniture (3) ; et
- formage du support de base (2) plan revêtu pour obtenir un corps de forme conique.

2. Procédé selon la revendication 1, **caractérisé en ce que** le maintien de zones libres a lieu simultanément avec l'application du premier matériau de garniture de friction en masquant le support de base (2) pendant l'application du premier matériau de garniture de friction.

3. Procédé selon la revendication 1, **caractérisé en ce que** le maintien de zones libres a lieu par estampage ou par usinage par enlèvement de matière du premier matériau de garniture de friction appliqué pour produire des poches de garniture.

4. Procédé selon l'une des revendications 1 à 3, **caractérisé en ce que** le premier matériau de garniture de friction est un matériau de garniture de friction métallique, en particulier un matériau répandu fritté.

5. Procédé selon la revendication 3, **caractérisé en ce que** le matériau de garniture de friction métallique destiné à être appliqué sur le support de base (2) est répandu sur celui-ci et cuit.

6. Procédé selon l'une des revendications 1 à 5, **caractérisé en ce que** le deuxième matériau de garniture de friction est une garniture en carbone ou un matériau de garniture de friction contenant des fibres.

7. Procédé selon l'une des revendications 1 à 6, **caractérisé en ce que** le deuxième matériau de garniture de friction est constitué par différents composants de matériau.

8. Procédé selon l'une des revendications 1 à 7, **caractérisé en ce que** le deuxième matériau de garniture de friction est relié aux zones maintenues libres par fusion de matière.

9. Bague de friction (1) fabriquée selon le procédé selon l'une des revendications précédentes,
- comportant un support de base (2) de forme conique qui présente deux surfaces de garniture (3, 4) de forme circulaire, qui sont limitées par un premier bord périphérique (5) de grand diamètre et par un deuxième bord périphérique (6) de plus petit diamètre,
- comportant une garniture de friction (7) sur au moins une des surfaces de garniture de friction (3, 4),
- la garniture de friction (7) présentant au moins un premier tronçon de garniture (8) en un premier matériau de garniture de friction et un deuxième tronçon de garniture (9) en un deuxième matériau de garniture de friction qui est différent du premier matériau de garniture de friction, et
les premier et deuxième tronçons de garniture (8, 9) s'étendent depuis le bord périphérique de plus grand diamètre jusqu'au bord périphérique de petit diamètre, et les tronçons de garniture (8. 9) étant agencés alternativement au voisinage l'un de l'autre sur la surface de garniture (3).

10. Bague de friction selon la revendication 9, **caractérisé en ce que** le premier matériau de garniture de friction est un matériau de garniture de friction métallique, en particulier un matériau répandu fritté, et le deuxième matériau de garniture de friction est un matériau de garniture de friction organique ou un matériau de garniture de friction contenant des fibres.
